# EUROPÄISCHE PATENTSCHRIFT

(11) **EP 3 289 916 B1**
(45) Veröffentlichungstag und Bekanntmachung des Hinweises auf die Patenterteilung: **05.06.2019**
(21) Anmeldenummer: 16186552.2
(22) Anmeldetag: 31.08.2016
(51) Int. Cl.: A45D 40/16, B29C 39/38, B29C 33/06, B29C 35/08

(54) **INDUKTIVES ERHITZEN VON GIESSFORMEN**
INDUCTIVE HEATING OF CASTING MOULDS
CHAUFFAGE INDUCTIF DE MOULES

(43) Veröffentlichungstag der Anmeldung: 07.03.2018
(73) Patentinhaber: Weckerle GmbH, 82362 Weilheim (DE)
(72) Erfinder: Droste, Sven, 82380 Peissenberg (DE)
(74) Vertreter: Hohgardt, Martin

(56) Entgegenhaltungen:
- EP-A1- 0 686 468
- WO-A2-02/11579
- DE-U1- 7 825 657
- DE-U1- 20 121 777
- GB-A- 1 101 033
- JP-A- 2012 067 020
- US-A- 2 626 428
- US-A- 3 228 662
- US-A- 5 200 173

## Beschreibung

Die vorliegende Erfindung betrifft im Allgemeinen das induktive Erhitzen von Gießformen für kosmetische Produkte, insbesondere das induktive Erhitzen von Gießformen, die aus einem Elastomer oder aus einem Kunststoff bestehen.

Gießformen dienen bei der Herstellung von kosmetischen Produkten beispielsweise zur Aufnahme eines erwärmten und fließfähigen Gemisches unterschiedlicher Wachse und Additive, wobei das Gemisch als pastöse Masse bezeichnet werden kann. Die pastöse Masse wird in die Gießformen gefüllt, um deren Gestalt anzunehmen. Eine Gießform kann dabei beispielsweise dazu verwendet werden, Lippenstiftminen zu formen. Die Gestalt der Lippenstiftmine entspricht dabei der inneren Kontur der Gießform, in die die pastöse Masse gefüllt wurde, und in der diese abgekühlt und erstarrt ist. Dabei kann das Abkühlen aktiv geschehen, also durch das Zutun einer Kühlung geschehen, oder passiv, also ohne das Zutun einer Kühlung. Um eine möglichst glatte Oberfläche der Lippenstiftmine zu erzielen, muss während des Abfüllprozesses ein vorzeitiges Abkühlen und Erstarren des Teils der pastösen Masse verhindert werden, der mit der inneren Kontur der Gießform direkt in Kontakt kommt. Hierfür werden die Gießformen vor dem Befüllen mit der pastösen Masse auf ein erhöhtes Temperaturniveau gebracht, d.h. die Gießformen werden aufgeheizt beziehungsweise vorgewärmt, wodurch das vorzeitige Erstarren zumindest des Teils der pastösen Masse verhindert wird, der mit der inneren Kontur der Gießform direkt in Kontakt kommt. Durch vorzeitiges Abkühlen und Erstarren der pastösen Masse kann es ansonsten zur Bildung von Rissen, Poren und Fehlstellen auf der Oberfläche des späteren Erzeugnisses, beispielsweise der Lippenstiftmine, kommen. Um diesen Qualitätseinbußen entgegenzuwirken, werden die Gießformen vor und / oder während des Gießprozesses aufgeheizt.

Im Stand der Technik sind verschiedene Verfahren und Vorrichtungen bekannt, mit deren Hilfe Gießformen aufgeheizt werden können, um bei deren Befüllung mit einer pastösen Masse das vorzeitige Abkühlen und Erstarren der pastösen Masse zu verhindern.

Beispielsweise beschreibt EP 0 712 593 A1, dass Gießformen erwärmt werden, indem diese mit temperiertem Wasser umspült werden.

Dies hat aber den Nachteil, dass ein Wärmeeintrag in die Formen nur indirekt geschieht, nämlich über den Wärmeträger Wasser. Gerade bei Gießformen, die aus schlecht wärmeleitenden Stoffen wie Kunststoffen oder Elastomeren bestehen, führt dies zu langen Verzögerungen im Prozesszyklus. Des Weiteren kann ein gleichmäßiger Wärmeeintrag nicht gewährleistet werden. Außerdem kann es bei derartigen Systemen meist zum direkten Kontakt zwischen dem Wärmeträgermedium und den Gießformen kommen. Dies kann dazu führen, dass die Gießformen frühzeitig abgenutzt werden oder sich an den Gießformen anderweitige Ablagerungen bilden, die sich nachteilig auf die Herstellung der kosmetischen Produkte auswirken können.

Aus der DE 201 21 777 U1 sind induktiv beheizbare Formwerkzeuge (Spritzgießwerkzeuge, Walzen) bekannt, wobei zur induktiven Erwärmung ein Werkzeug insgesamt oder nur in den zu erwärmenden Bereichen, in dünner Schicht, aus einem induktiv erwärmbaren Material, beispielweise magnetisierbarem Stahl bestehen kann, während die Flächenbereiche und der im wesentlichen massive Teil des Werkzeuges, der nicht induktiv erwärmt werden soll, aus nicht magnetiersierbarem Material besteht. Die GB 1 101 033 A befasst sich unter anderem mit dem Gießen von Kosmetika und Lippenstiften, wobei die Masse mit IR-Strahlen erwärmt wird. Als Alternativen werden allgemein Hochfrequenz-, dielektrische und induktive Erwärmung genannt. Die US 5 200 173 A offenbart die Herstellung von Lippenstiften, wobei die Gießwerkzeuge aus gefülltem Kunststoff bestehen können, wobei der Füllstoff die Wärmeleiteigenschaft und Stabilität der Gießwerkzeuge verbessert. Die DE 78 25 657 U1 offenbart zur dielektrischen Erwärmung, dass der Matrizenhohlraum, der mit dem zu formenden Kunststoffmaterial in Berührung steht, aus einem Material mit erhöhten dielektrischen Verlusten in Form von Harz mit leitendem Rußschwarz besteht, damit dieser Teil der Form ebenfalls erwärmt wird. Ebenso ist es aus der US 2 626 428 A bekannt, Formwerkzeuge aus Elastomer dielektrisch zu erwärmen, wobei diese mit Einlegern aus gefülltem Elastomer versehen sind.

Aufgabe der vorliegenden Erfindung ist es daher, ein Verfahren, eine Gießform und ein System bereitzustellen, die die oben genannten Nachteile nicht aufweisen. Insbesondere soll mit dem Verfahren und dem System ein gezieltes Vorwärmen der Gießformen möglich sein, auch wenn diese aus einem schlecht wärmeleitenden Material bestehen.

Diese Aufgabe wird mit dem Verfahren, der Gießform und dem System der unabhängigen Ansprüche gelöst. Vorteilhafte Ausführungsformen sind in den Unteransprüchen beschrieben.

Das erfindungsgemäße Verfahren zum induktiven Erhitzen von Gießformen, insbesondere zum induktiven Erhitzen von Gießformen für kosmetische Produkte, weist auf das Erzeugen von zumindest einem magnetischen Wechselfeld mit Hilfe von zumindest einem Induktor und das induktive Erhitzen von zumindest einer Gießform, wobei die zumindest eine Gießform im Wesentlichen aus einem Kunststoff oder Elastomer besteht und mit zumindest einem Zusatzstoff durchsetzt ist, wobei der zumindest eine Zusatzstoff induktiv erhitzt werden kann. Dadurch, dass die Gießform im Wesentlichen aus einem Kunststoff oder Elastomer besteht, kann diese zumindest teilweise flexibel sein.

Das induktive Erhitzen beruht darauf, dass der zumindest eine Induktor von einem Wechselstrom durchströmt werden kann, der zumindest ein magnetisches Feld um den zumindest einen Induktor erzeugt. Das magnetische Feld wiederum induziert in dem Zusatzstoff, mit dem die Gießform durchsetzt ist, Wirbelströme, die direkt in Wärme umgewandelt werden, wobei die Wärme an das Material abgegeben wird, das den Zusatzstoff umgibt. Hierdurch wird auch dieses Material erhitzt beziehungsweise aufgewärmt. Der Zusatzstoff in der Gießform wird somit induktiv erhitzt und bewirkt einen Wärmeeintrag in das Material der Gießform, das den Zusatzstoff umgibt. Es kann also davon gesprochen werden, dass der Zusatzstoff direkt erhitzt wird, wohingegen das Material der Gießform indirekt erhitzt wird. Die Temperatur, auf die die Gießform erhitzt wird, hängt dabei unter anderem von der Stärke der erzeugten Wirbelströme ab. Die Stärke der Wirbelströme ist dabei abhängig von dem Abstand zwischen dem Induktor und der dem Induktor zugewandten Oberfläche der Gießform sowie von der Stärke des Wechselstromes, der den zumindest einen Induktor durchfließt. Die Temperatur kann dabei beispielsweise über die zuvor genannten Faktoren so geregelt werden, dass es zu keinen Schädigungen des Materials aufgrund von Überhitzung kommt, ein gezielter Wärmeeintrag in die Gießform aber ermöglicht wird.

Das erfindungsgemäße Verfahren stellt erstmalig ein Verfahren bereit, mit dem ein gezieltes Erhitzen von Gießformen für kosmetische Produkte möglich ist, d.h. ein Verfahren, bei dem das Erhitzen der Gießform möglichst schnell und gezielt stattfindet und eine möglichst kurze Zykluszeit bei der Herstellung von kosmetischen Produkten erreicht werden kann. Des Weiteren kann ein derartiges Verfahren auch nahezu kontaktlos ausgeführt werden.

In einer bevorzugten Ausführungsform des erfindungsgemäßen Verfahrens wird das zumindest eine magnetische Feld, erzeugt durch den zumindest einen Induktor, geregelt. Das magnetische Feld setzt sich aus magnetischen Feldlinien zusammen, die auf geschlossenen Bahnen um den Induktor herum verlaufen. Das magnetische Feld kann dabei über die beiden physikalischen Größen magnetische Feldstärke und magnetische Flussdichte quantifiziert werden. Die Regelung des magnetischen Feldes kann demnach beispielsweise über die Regelung der magnetischen Feldstärke und der magnetischen Flussdichte stattfinden. Die magnetische Feldstärke und die magnetische Flussdichte können dabei durch die Geometrie des Induktors selbst gesteuert werden, aber auch durch den Wechselstrom geregelt werden, der den Induktor durchströmt. Das Regeln des zumindest einen magnetischen Feldes kann dabei das Regeln der Stärke des Wechselstromes beinhalten. Die Stärke des den Induktor durchströmenden Wechselstromes ist dabei proportional zu der Stärke der erzeugten magnetischen Feldstärke und der magnetischen Flussdichte. Die magnetische Flussdichte entspricht der magnetischen Feldstärke multipliziert mit der magnetischen Feldkonstante und der Permeabilitätszahl. Die periodische Änderung des Stromes bewirkt eine periodische Änderung des vom Induktor erzeugten magnetischen Feldes. Aufgrund der periodischen Änderung des magnetischen Feldes kann das magnetische Feld auch als magnetisches Wechselfeld bezeichnet werden. Mit der Regelung der Stärke des Wechselstromes kann Einfluss auf die Stärke der induzierten Wirbelströme genommen werden, wodurch der Grad des Wärmeeintrages geregelt werden kann. Das Erhitzen der Gießform kann also geregelt werden. Dabei gilt, je stärker der den Induktor durchströmende Wechselstrom ist, desto stärker sind die erzeugten Wirbelströme und desto größer ist der stattfindende Wärmeeintrag. Beispielsweise kann die Stärke des Wechselstroms im Bereich zwischen 50 A und 400 A liegen.

Zusätzlich oder alternativ zur Regelung der Stärke des Wechselstromes, der den zumindest einen Induktor durchströmt, kann auch die Frequenz des Wechselstromes geregelt werden. Die Frequenz des Wechselstromes, von dem der erfindungsgemäß zumindest eine Induktor durchflossen wird, gibt die Frequenz vor, mit der das magnetische Wechselfeld seine Richtung wechselt.

Im Allgemeinen hat die Frequenz eines magnetischen Wechselfeldes bei dem induktiven Erhitzen einen Einfluss auf die Verteilung der Stromdichte von den Wirbelströmen, die in dem zu erhitzenden Zusatzstoff der Gießform durch das magnetische Wechselfeld induziert werden. Dabei kann beispielsweise die größte Stromdichte von den induzierten Wirbelströmen in der zumindest einen Gießform auch an ihrer dem Induktor zugewandten Oberfläche auftreten und kann mit zunehmendem Abstand abnehmen. Die Eindringtiefe der induzierten Wirbelströme hängt dabei von der Frequenz des Wechselstromes ab, von dem der Induktor durchflossen wird. Je höher die Frequenz ist, desto geringer ist die Eindringtiefe der induzierten Wirbelströme. Über die Frequenz des Wechselstromes, der den Induktor durchströmt, lässt sich somit die Eindringtiefe der induzierten Wirbelströme bestimmen. Umgibt der Induktor beispielsweise zumindest teilweise die Gießform, so kann beispielsweise die Frequenz so geregelt werden, dass die Eindringtiefe der induzierten Wirbelströme derart eingestellt ist, dass die Wirbelströme zunächst einen Bereich der Gießform erhitzen, der dem Induktor zugewandt ist, und die Frequenz kann anschließend derart geregelt werden, dass die Eindringtiefe der induzierten Wirbelströme derart eingestellt ist, dass ein weiter vom Induktor beabstandeter Bereich der Gießform erhitzt wird. Beispielsweise kann die Frequenz des Wechselstroms im Bereich zwischen 50 Hz und 450 kHz liegen.

Über die Regelung der Stärke des Wechselstromes und dessen Frequenz lässt sich somit der Wärmeeintrag in die Gießform regeln und es lässt sich ein gezieltes Wärmeprofil erzeugen. Dabei kann das erzeugte Wärmeprofil an die Eigenschaften der pastösen Masse angepasst werden, die in die Gießform gefüllt wird. Das Wärmeprofil kann also auf die Wachse und Additive abgestimmt sein, aus denen die pastöse Masse besteht, und kann derart angepasst sein, dass die pastöse Masse gezielt in der Gießform Erstarren kann. Dabei kann es beispielsweise auch vorteilhaft sein, wenn der Induktor auch während des Befüllens und / oder nach dem Befüllen der Gießform Wirbelströme erzeugt, deren Stärke und Eindringtiefe aber mit fortscheitender Zeit abnimmt, so dass die pastöse Masse gezielt in der Gießform abkühlen und damit erstarren kann.

In einer weiteren bevorzugten Ausführungsform des erfindungsgemäßen Verfahrens weist das Verfahren auf das Einstellen eines Abstandes zwischen dem zumindest einen Induktor und der zumindest einen Gießform. Über den Abstand zwischen dem Induktor und der Gießform lässt sich die Flächendichte der magnetischen Feldlinien des vom Induktor erzeugten magnetischen Wechselfeldes regeln, mit der das magnetische Wechselfeld die Gießform durchdringt. Mit dem Abstand lässt sich also auch der Wärmeeintrag regeln. Der Grad des Wärmeeintrages beziehungsweise der induzierten Wirbelströme verhält sich dabei proportional zur Flächendichte der magnetischen Feldlinien, von denen die Gießform durchdrungen werden, und wirkt sich somit proportional auf den Grad des Erhitzens der Gießform aus. Mit dem Einstellen des Abstandes zwischen dem Induktor und der Gießform kann somit der Grad des Erhitzens der zumindest einen Gießform gesteuert werden. Man kann auch sagen, dass mit dem Einstellen des Abstandes zwischen dem Induktor und der Gießform der Wirkungsgrad des induktiven Erhitzens geregelt werden kann. Der Abstand zwischen dem Induktor und der Gießform kann dabei durch eine Bewegung des Induktors und / oder der Gießform eingestellt werden.

In einer weiteren bevorzugten Ausführungsform des erfindungsgemäßen Verfahrens weist das Verfahren auf das Bestimmen einer Temperatur von der zumindest einen zu erhitzenden Gießform und das Steuern des induktiven Erhitzens der zumindest einen Gießform, basierend auf der bestimmten Temperatur. Mit dem induktiven Erhitzen der zumindest einen Gießform wird die Gießform vor dem Befüllen mit der pastösen Masse erfindungsgemäß auf ein erhöhtes Temperaturniveau gebracht. Das erhöhte Temperaturniveau der Gießform wird dabei so gewählt, dass die pastöse Masse während des gesamten Befüllvorgangs einen fließfähigen Zustand beibehält. Insbesondere soll durch das erhöhte Temperaturniveau der Gießform die pastöse Masse an ihren Rändern, also dort, wo sie direkten Kontakt mit der Wandung der Gießform hat, während des gesamten Befüllvorgangs einen fließfähigen Zustand beibehalten. Die Temperatur der zumindest einen Gießform kann beispielsweise vor dem Beginn des induktiven Erhitzens bestimmt werden und stellt einen Istwert der Temperatur der Gießform vor dem Beginn des Befüllvorgangs dar. Der Istwert kann mit einem Sollwert der Temperatur der zumindest einen Gießform verglichen werden, der beispielsweise die Solltemperatur, also das erhöhte Temperaturniveau der Gießform vor dem Beginn des Befüllvorgangs, darstellt. Aus der Differenz zwischen dem Istwert und dem Sollwert der Temperatur der zumindest einen Gießform kann der Grad der Erwärmung ermittelt werden, der notwendig ist, um die Gießform auf die gewünschte Solltemperatur induktiv zu erhitzen. Die Temperatur kann während des induktiven Erhitzens der Gießform in regelmäßigen Abständen ermittelt werden. Der Sollwert der Temperatur der zumindest einen Gießform kann einen oberen Grenzwert darstellen und das induktive Erhitzen der zumindest einen Gießform kann dabei so gesteuert werden, dass das induktive Erhitzen der zumindest einen Gießform beendet wird, sobald die Temperatur der Gießform den oberen Grenzwert überschreitet. Die Solltemperatur der Gießform kann beispielsweise auch vor dem Beginn des Befüllvorgangs auf einen Bereich eingestellt werden, der als oberer Temperaturbereich bezeichnet werden kann, und der von einem oberen und von einem unteren Grenzwert begrenzt wird. Das induktive Erhitzen der zumindest einen Gießform kann dabei so gesteuert werden, dass das induktive Erhitzen der zumindest einen Gießform unterbrochen wird, sobald die Temperatur der Gießform den oberen Grenzwert überschreitet, und dass das induktive Erhitzen der zumindest einen Gießform fortgesetzt wird, sobald die Temperatur der Gießform den unteren Grenzwert unterschreitet. Der Wechsel zwischen Unterbrechen und Fortsetzen des induktiven Erhitzens kann solange wiederholt werden, wie gewünscht und / oder solange, wie es sinnvoll erscheint. Beispielsweise kann der Wechsel zwischen Unterbrechen und Fortsetzen des induktiven Erhitzens noch während des Befüllvorgangs stattfinden. Dem Fachmann ist bewusst, dass der Wechsel zwischen Unterbrechen und Fortsetzen des induktiven Erhitzens als ein Regelkreis bezeichnet werden kann. Dieser Regelkreis kann als ein Schwingkreis dargestellt werden und der Fachmann ist in der Lage die Parameter der verschiedenen Komponenten in dem Schwingkreis so einzustellen, dass eine stabile Regelung der Temperatur der zumindest einen Gießform ermöglicht wird. Die Temperatur der zumindest einen Gießform kann dabei so geregelt werden, dass unterschiedliche Bereiche der Gießform unterschiedlich stark erhitzt werden. Beispielsweise kann die Temperatur während des Befüllvorgangs in einem unteren Bereich der Gießform, der bereits mit der pastösen Masse gefüllt ist, reduziert werden, während in einem oberen Bereich der Gießform, in dem die Gießform gerade mit der pastösen Masse befüllt wird, ein höheres Temperaturniveau aufrechterhalten wird. Erfindungsgemäß kann die Temperatur auf der innenliegenden Oberfläche, also der inneren Kontur, der zumindest einen Gießform bestimmt werden aber es kann auch die Temperatur auf der außenliegenden Oberfläche, also der äußeren Kontur, der zumindest einen Gießform bestimmt werden. Beispielsweise kann die Temperatur im Inneren der zumindest einen Gießform bestimmt werden, um bei einer Bestimmung der Temperatur der zumindest einen Gießform während des Befüllvorgangs den Befüllvorgang der zumindest einen Gießform nur in einem möglichst geringen Maß zu stören. Der Grad der Erwärmung kann über die Regelung der oben beschriebenen Parameter so beeinflusst werden, dass ein möglichst schnelles und gezieltes Erhitzen der zumindest einen Gießform stattfindet, ohne dass das Material durch Überhitzung beschädigt wird, wobei es sich bei dem Material um das Material handeln kann, aus dem die zumindest eine Gießform im Wesentlichen besteht aber auch um das Material der Wachse und Additive, aus denen die pastöse Masse besteht. Dem Fachmann sind noch weitere Parameter bekannt, über die der Grad der Erwärmung beeinflusst werden kann, beispielsweise über die Wahl des Materials, aus dem der Induktor besteht.

Die oben genannte Aufgabe wird auch gelöst durch eine erfindungsgemäße Gießform, insbesondere eine Gießform zum Formen von kosmetischen Produkten, die im Wesentlichen aus einem Kunststoff oder Elastomer besteht und die zumindest mit einem Zusatzstoff durchsetzt ist, wobei der Zusatzstoff induktiv erhitzt werden kann. Dadurch, dass die Gießform im Wesentlichen aus einem Kunststoff oder Elastomer besteht, kann diese zumindest teilweise flexibel sein. Der zumindest eine Zusatzstoff kann beispielsweise in Form von Partikeln dem Material, aus dem die Gießform geformt ist, beigegeben werden. Dabei können der Kunststoff oder das Elastomer der Gießform und der Zusatzstoff ein heterogenes Stoffgemisch bilden. Man kann sagen, dass es sich bei dem heterogenen Stoffgemisch um eine Dispersion handelt, wobei der Zusatzstoff in der Gießform eine disperse Phase und der Kunststoff oder das Elastomer in der Gießform ein Dispersionsmedium bilden. Das Dispersionsmedium verleiht der Gießform beispielsweise Flexibilität und eine glatte Oberfläche und die disperse Phase reagiert beispielsweise auf das induzierte magnetische Wechselfeld und verleiht der Gießform die Eigenschaft, induktiv erhitzt werden zu können. Aufgrund der Wärmeübertragung wird bei dem induktiven Erhitzen der Gießform die erzeugte Wärme von der dispersen Phase auf das Dispersionsmedium übertragen und somit wird die Gießform erhitzt. Es kann auch gesagt werden, dass die disperse Phase direkt erhitzt wird, wohingegen das Dispersionsmedium indirekt erhitzt wird. Der Anteil der dispersen Phase in der Dispersion kann hierbei variieren und beispielsweise von den spezifischen Wärmekapazitäten und von den Wärmeleitfähigkeiten der verwendeten Materialien abhängen. Die disperse Phase weist in der Regel eine niedrigere spezifische Wärmkapazität und einen höheren Wärmeleitkoeffizienten auf, als das Dispersionsmedium, d.h. die disperse Phase lässt sich schnell auf ein hohes Temperaturniveau erhitzen, kann die erzeugte Wärme jedoch nicht lange speichern. Soll die induktiv erhitzte Gießform ihr einmal erreichtes hohes Temperaturniveau nach einer Unterbrechung des induktiven Erhitzens über einen langen Zeitraum halten können, ist ein niedriger Anteil der dispersen Phase in der Dispersion, also im Gefüge der Gießform, von Vorteil. Der Anteil der dispersen Phase kann also so niedrig sein, dass man sagen kann, dass die Gießform im Wesentlichen aus dem Dispersionsmedium, d.h. dem Kunststoff oder dem Elastomer besteht. Beispielsweise kann die Dispersion derart ausgestaltet sein, dass die disperse Phase in der Dispersion einen Masseanteil von bis zu 10% aufweist.

Soll andererseits beispielsweise ein schnelles Erhitzen der Gießform auf ein hohes Temperaturniveau ermöglicht werden, wobei nach einer Unterbrechung des induktiven Erhitzens die Gießform schnell wieder abkühlt, ist ein hoher Anteil der dispersen Phase von Vorteil. Der Anteil der dispersen Phase kann also so hoch sein, dass man gegebenenfalls auch sagen kann, dass die Gießform zum Teil aus dem Dispersionsmedium, d.h. einem Kunststoff oder Elastomer, besteht und zum anderen Teil aus der dispersen Phase.

Wie oben beschrieben, besteht die disperse Phase zumeist aus Partikeln, die induktiv erhitzbar sind, also erhitzt werden können. Die Partikel können hierbei in der Gießform beispielsweise gleichmäßig verteilt sein. Aus der gleichmäßigen Verteilung der Partikel kann eine gleichmäßige Wärmeleitfähigkeit und eine gleichmäßige spezifische Wärmekapazität der Gießform angenommen werden und der Grad des induktiven Erhitzens der Gießform kann über die bereits beschriebenen Parameter geregelt werden. Die Partikel können aber auch ungleichmäßig verteilt sein, woraus beispielsweise eine Häufung der Partikel in bestimmten Bereichen resultieren kann. Durch die Häufung der Partikel in bestimmten Bereichen in der Gießform, können die hohe Wärmeleitfähigkeit und die niedrige spezifische Wärmekapazität der Partikel beispielsweise so genutzt werden, dass eine Lenkung des Wärmestroms durch die Gießform hindurch oder auch an ihrer Oberfläche entlang stattfinden kann. Beispielsweise kann durch die Häufung der Partikel in einem bestimmten Bereich der Gießform ein hoher Grad des induktiven Erhitzens der Gießform in dem bestimmten Bereich konzentriert werden, wohingegen in einem anderen Bereich der Gießform ein niedriger Grad des induktiven Erhitzens der Gießform stattfinden kann. Bei dem induktiven Erhitzen der Gießform gilt es insbesondere diejenige Oberfläche der Gießform zu erhitzen, die mit der pastösen Masse in Kontakt kommt, also die innere Kontur der Gießform. Für ein möglichst effektives induktives Erhitzen der innenliegenden Kontur der Gießform, die die innenliegende Oberfläche der Gießform darstellt, können die Partikel beispielsweise in dem Bereich der innenliegenden Oberfläche der Gießform konzentriert werden, um diesen Bereich der Gießform gezielt zu erhitzen. Mit dem Bereich der innenliegenden Oberfläche der Gießform kann dabei beispielsweise ein Bereich gemeint sein, der von der innenliegenden Oberfläche der Gießform bis zur Hälfte der Dicke der Gießform in die Gießform hineinreicht. Die Partikel können eine bestimmte Größe aufweisen, die als Teilchengröße bezeichnet werden kann, wobei die Teilchengröße beispielsweise in Abhängigkeit von dem Verfahren gewählt werden kann, mit dem die Partikel in das Dispersionsmedium eingebracht werden. Die Teilchengröße kann beispielsweise auf die mechanischen Eigenschaften der Gießform angepasst werden. Zum Beispiel kann die Teilchengröße an die geforderte Flexibilität der Gießform angepasst werden. Die Teilchengröße kann beispielsweise auch auf die an die gewünschte Oberflächenbeschaffenheit der Gießform angepasst werden. Zum Beispiel kann die Teilchengröße angepasst werden, um eine glatte Oberfläche der Gießform bereitzustellen. Dem Fachmann sind weitere Kenngrößen bekannt, an welche die Teilchengröße der dispersen Phase in dem Dispersionsmedium angepasst werden kann. Die Partikel in der Gießform können beispielsweise eine Teilchengröße zwischen 40 µm und 400 µm aufweisen. Die Verteilung des zumindest einen Zusatzstoffes in Form von Partikeln in der Gießform geschieht bei der Herstellung der Gießform. Das Verfahren, mit dem die Partikel hierbei in die Gießform eingebracht werden, kann als Impfen bezeichnet werden. Hierbei werden die Partikel, die den zumindest einen Zusatzstoff bilden, und der Kunststoff bzw. das Elastomer miteinander vermischt. Dies ist möglich, da der zumindest eine Zusatzstoff beispielsweise keine chemische Verbindung mit dem Kunststoff bzw. dem Elastomer eingeht und nicht an der Vernetzung teilnimmt. Der Zusatzstoff und der Kunststoff bzw. das Elastomer müssen somit lediglich homogen vermischt werden.

In einer bevorzugten Ausführungsform der erfindungsgemäßen Gießform ist der Kunststoff ein Kunststoff aus der Gruppe von thermoplastisch verarbeitbaren Elastomeren (TPE) und das Elastomer ist ein Elastomer aus der Gruppe von thermisch vulkanisierbaren Silikonkautschuken, wie beispielsweise RTVs (room temperature vulcanized rubber) oder HTVs (high temperature vulcanized rubber). Das Elastomer kann auch ein Elastomer aus der Gruppe der LSRs (liquid silicone rubber) sein.

In einer bevorzugten Ausführungsform der erfindungsgemäßen Gießform ist der zumindest eine Zusatzstoff ein Zusatzstoff aus der Gruppe von einem ferromagnetischen Stoff, wie zum Beispiel "MagSilica" von "Evonik". Des Weiteren ist dem Fachmann bewusst, dass auch andere Zusatzstoffe verwendet werden können, das ein entsprechendes induktives Erhitzen zur Folge haben. Beispielsweise können Metallpulver, die vorzugsweise einen Fe-Anteil > 50% aufweisen, wie sie beispielsweise aus der pulvermetallurgischen Spritzgießtechnik bekannt sind, verwendet werden. Die Zusatzstoffe können dabei beispielsweise Legierungsbestandteile von Kohlenstoff, Silizium, Chrom, Molybdän, Kobalt und Wolfram aufweisen.

Die oben genannte Aufgabe wird auch gelöst durch ein System zum Erhitzen von Gießformen, insbesondere zum Erhitzen von Gießformen für kosmetische Produkte. Das erfindungsgemäße System weist auf zumindest einen Induktor zum Erzeugen von zumindest einem magnetischen Wechselfeld und zumindest eine Gießform, wobei die Gießform im Wesentlichen aus einem Kunststoff oder Elastomer besteht und zumindest mit einem Zusatzstoff durchsetzt ist, wobei der Zusatzstoff induktiv erhitzt werden kann. Beispielsweise kann das System so aufgebaut sein, dass jeder Induktor und jede Gießform eine Komponente des Systems darstellen, und dass jeder Induktor ein magnetisches Wechselfeld erzeugt, das jeweils eine Gießform für das induktive Erhitzen durchdringt. Dem Fachmann ist bewusst, dass aber auch andere Anordnungen von den Komponenten in dem System möglich sind, um die Gießformen für das induktive Erhitzen einem magnetischen Wechselfeld auszusetzen. Beispielsweise können mehrere Gießformen von demselben magnetischen Wechselfeld durchdrungen werden.

In einer bevorzugten Ausführungsform weist das System auf ein Mittel zum Regeln der Stärke des Wechselstromes und / oder zum Regeln der Frequenz des Wechselstromes, von dem der zumindest eine Induktor zum Erzeugen des magnetischen Wechselfeldes durchflossen wird. Für die Regelung der Stärke des Wechselstromes und somit für die Leistungsregelung des Induktors, der von dem Wechselstrom durchflossen wird, können beispielsweise Wechselstromregler verwendet werden, die mit Thyristoren ausgestattet sind. Diese elektronischen Bauteile können in niedrigen, mittleren und hohen Leistungsbereichen eingesetzt werden. Für die Regelung der Frequenz des Wechselstromes können beispielsweise Frequenzumrichter verwendet werden, die eine in der Frequenz und in der Amplitude regelbare Wechselspannung generieren. Beispielsweise können Frequenzumrichter verwendet werden, die Eingänge für Sensorsignale aufweisen, und bei denen die generierte Wechselspannung in der Frequenz und der Amplitude abhängig ist von den eingehenden Sensorsignalen oder einer entsprechenden Steuerung. Der zumindest eine Induktor kann derart ausgestaltet sein, dass er in seinem Inneren zumindest einen Hohlraum aufweist, in den ein Kühlmedium eindringen kann. Beispielsweise kann das Kühlmedium durch den zumindest einen Hohlraum des zumindest einen Induktors befördert werden, indem es zwangsmäßig eingeführt wird, wie beispielsweise mit einer Pumpe. Bei dem Kühlmedium kann es sich beispielsweise um Wasser handeln. Dem Fachmann ist bewusst, dass für die Versorgung des zumindest einen Induktors Mittelfrequenz- und / oder Hochfrequenzgeneratoren eingesetzt werden können, welche die für das induktive Erhitzen notwendige elektrische Leistung über einen breiten Frequenzbereich liefern können. Die Stärke des Wechselstroms und die Frequenz des Wechselstroms können dabei so von einem Steueroszillator erfasst und angepasst werden, dass ein Wirkungsgradoptimum erreicht wird. Das bedeutet, dass ein möglichst großer Teil der aufgewandten elektrischen Energie in Wärmeenergie umgewandelt werden kann. Beispielsweise können hierfür Mittelfrequenz- und / oder Hochfrequenzgeneratoren, wie der TruHeat HF 3010 von Trumpf Hüttinger, eingesetzt werden.

In einer bevorzugten Ausführungsform des erfindungsgemäßen Systems wird die Stärke des Wechselstromes, von dem der zumindest eine Induktor durchflossen wird, im Bereich von 50 Abis 400 A eingestellt und die Frequenz des Wechselstromes, von dem der zumindest eine Induktor durchflossen wird, im Bereich von 50 Hz bis 450 kHz eingestellt.

In einer weiteren bevorzugten Ausführungsform weist das System auf ein Mittel zum Einstellen des Abstandes zwischen dem zumindest einen Induktor und der zumindest einen Gießform.

Der Abstand zwischen dem Induktor und der Gießform kann mittels optischer Messverfahren ermittelt werden. Insbesondere soll hierbei der Abstand zwischen dem Induktor und der dem Induktor zugewandten Oberfläche der Gießform ermittelt werden. Das optische Messverfahren erlaubt somit eine berührungslose Messung des Abstandes zwischen Induktor und der dem Induktor zugewandten Oberfläche, ohne störenden Eingriff in den Prozess des induktiven Erhitzens. Ein optisches Messverfahren kann beispielsweise mit dem Einsatz eines Lasers bereitgestellt werden, der nach dem Triangulationsprinzip arbeitet, mit dem der Abstand zwischen Induktor und der dem Induktor zugewandten Oberfläche der Gießform aus einer verhältnismäßig großen Entfernung ermittelt werden kann. Der Laser sendet hierbei Strahlen aus, die an der Oberfläche des Induktors und an der dem Induktor zugewandten Oberfläche der Gießform reflektiert werden und dann von einem optischen Sensor empfangen werden. Alternativ oder zusätzlich zum optischen Messverfahren kann der zumindest eine Induktor beispielsweise zumindest ein Strukturelement aufweisen, das an die Bewegung des zumindest einen Induktors gekoppelt ist, und die zumindest eine Gießform kann beispielsweise zumindest ein Strukturelement aufweisen, das an die Bewegung der zumindest einen Gießform gekoppelt ist, und der Abstand zwischen dem zumindest einen Induktor und der dem Induktor zugewandten Oberfläche der zumindest einen Gießform kann beispielsweise aus dem Abstand der Strukturelemente abgeleitet werden. In diesem Fall können beispielsweise einfache Kontaktsensoren verwendet werden, um den Abstand zwischen den Strukturelementen zu erfassen. Alternativ können hierfür auch induktive Sensoren oder kapazitive Sensoren verwendet werden. Dem Fachmann ist bewusst, dass aber auch andere Sensoren verwendet werden können, um den Abstand zwischen den Strukturelementen zu erfassen, die an die Bewegung des zumindest einen Induktors und an die Bewegung der zumindest einen Gießform gekoppelt sind.

Der Abstand zwischen dem zumindest einen Induktor und der dem Induktor zugewandten Oberfläche der zumindest einen Gießform kann über eine Relativbewegung des Induktors und der Gießform eingestellt werden. Dabei können der Induktor und die Gießform so angeordnet sein, dass die dem Induktor zugewandte Oberfläche der Gießform die Außenfläche der Gießform ist. In diesem Fall bewegen sich zum Einstellen des Abstandes zwischen dem Induktor und der dem Induktor zugewandten Oberfläche der Gießform der Induktor und die Gießform in der Art relativ zueinander, dass der Induktor die Gießform umschließt. Bei dem Induktor kann es sich hierbei beispielsweise um einen so genannten Innenfeldinduktor handeln, der wie eine Spule geformt ist, bei der die höchste magnetische Flussdichte des induzierten magnetischen Wechselfeldes im Inneren der Spule auftritt. Die Relativbewegung kann hierbei beispielsweise dadurch hervorgerufen werden, dass der Induktor mittels eines Hubmechanismus so an die Gießform herangeführt wird, dass er diese umschließt. Alternativ kann auch die Gießform mittels eines Hubmechanismus so bewegt werden, dass sie von dem Induktor umschlossen wird. Beispielsweise kann die Relativbewegung des Induktors und der Gießform durch eine gleichzeitige oder zeitlich versetzte Bewegung des Induktors und der Gießform erzeugt werden. Der Induktor und die dem Induktor zugewandte Oberfläche der Gießform können aber auch so angeordnet sein, dass die dem Induktor zugewandte Oberfläche der Gießform die Innenfläche der Gießform ist. In diesem Fall bewegen sich zum Einstellen des Abstandes zwischen dem Induktor und der dem Induktor zugewandten Oberfläche der Gießform in der Art relativ zueinander, dass der Induktor in die Gießform eintaucht. Bei dem Induktor kann es sich hierbei beispielsweise um einen so genannten Außenfeldinduktor handeln, bei dem die höchste magnetische Flussdichte des induzierten magnetischen Wechselfeldes außerhalb des Induktors auftritt. Die Relativbewegung kann hierbei beispielsweise dadurch hervorgerufen werden, dass der Induktor mittels eines Hubmechanismus so an die Gießform herangeführt wird, dass er in diese eintaucht. Alternativ kann auch die Gießform mittels eines Hubmechanismus so bewegt werden, dass sie den Induktor umschließt. Beispielsweise kann die Relativbewegung des Induktors und der Gießform auch durch eine gleichzeitige oder zeitlich versetzte Bewegung des Induktors und der Gießform erzeugt werden. Beispielsweise kann der zumindest eine Induktor und / oder die zumindest eine Gießform auch auf jeweils zumindest einem Strukturelement montiert sein und das Strukturelement kann von einem Hubmechanismus in Bewegung versetzt werden. Die Bewegung der Strukturelemente kann dabei derart angepasst sein, dass sie einer Taktung folgt, wobei die Taktung eine Aufteilung von aufeinander folgenden Arbeitstakten in Zeitabschnitte darstellt.

Ein Arbeitstakt kann dabei beispielsweise in drei Zeitabschnitte unterteilt werden. In einem ersten Zeitabschnitt des Arbeitstaktes kann zumindest ein Strukturelement derart bewegt werden, dass das zumindest eine Strukturelement eine Position erreicht, in der die zumindest eine Gießform von dem zumindest einen Induktor induktiv erhitzt werden kann. Anschließend kann in einem zweiten Zeitabschnitt des Arbeitstaktes die zumindest eine Gießform induktiv erwärmt werden. In einem dritten Zeitabschnitt des Arbeitstaktes kann das zumindest eine Strukturelement derart bewegt werden, dass sich die zumindest eine Gießform und der zumindest eine Induktor voneinander wegbewegen, so dass in einem folgenden Arbeitstakt eine weitere Gießform zum Induktor bewegt werden kann. Dies kann als Weitertaktung des Strukturelements bezeichnet werden. Dem Fachmann ist bewusst, dass die beschriebenen Bewegungen Relativbewegungen des zumindest einen Strukturelements und des zumindest einen Induktors darstellen, und dass diese Relativbewegungen beispielsweise auch ausgeführt werden können, indem nur der zumindest eine Induktor bewegt wird, während das zumindest eine Strukturelement nicht bewegt wird. Die Relativbewegungen können beispielsweise aber auch ausgeführt werden, indem beide, der zumindest eine Induktor und das zumindest eine Strukturelement, bewegt werden. Dem Fachmann ist bewusst, dass somit neben der Bewegung des zumindest einen Strukturelements, auch die Bewegung des zumindest einen Hubmechanismus, von dem der zumindest eine Induktor und / oder die zumindest eine Gießform und / oder das zumindest eine Strukturelement in Bewegung versetzt werden können, getaktet sein kann. Der zumindest eine Hubmechanismus, der den zumindest einen Induktor und / oder die zumindest eine Gießform und / oder das zumindest eine Strukturelement in Bewegung versetzt, kann beispielsweise von zumindest einem Schrittmotor angetrieben werden. Ein Schrittmotor ist dabei ein mehrphasiger Synchronmotor, der mittels einer elektronischen Schaltung impulsmäßig angesteuert wird. Bei einer Ansteuerung mit einem Impuls führt die Motorwelle eine Drehung um einen bestimmten Drehwinkel aus, den so genannten Schrittwinkel. Bei dem Mittel, das den zumindest einen Hubmechanismus in Bewegung versetzt, kann es sich auch um einen Servomotor handeln. Ein Servomotor ist dabei ein Elektromotor, der über einen Sensor für die Positionsbestimmung, die Winkelposition und die Drehgeschwindigkeit der Motorwelle kontrollieren kann. Das Mittel, mit dem der zumindest eine Induktor und / oder die zumindest eine Gießform und / oder das zumindest eine Strukturelement in Bewegung versetzt werden, reagiert dabei auf die Sensorsignale, die den Abstand zwischen dem Induktor und der dem Induktor zugewandten Oberflächen der Gießform angeben. Dem Fachmann sind noch weitere Mittel bekannt, um den zumindest einen Induktor und / oder die zumindest eine Gießform und / oder das zumindest eine Strukturelement in Bewegung zu versetzen und einen bestimmten Abstand zwischen dem zumindest einen Induktor und der dem Induktor zugewandten Oberfläche der zumindest einen Gießform einzustellen. Beispielsweise können hierfür auch Hydraulik- oder Pneumatik-Aktuatoren verwendet werden.

In einer bevorzugten Ausführungsform weist das System auf ein Mittel zum Bestimmen einer Temperatur von der zumindest einen Gießform und ein Mittel zum Steuern des zumindest einen Induktors basierend auf der bestimmten Temperatur. Die Temperatur der Gießform kann beispielsweise mit zumindest einem Pyrometer bestimmt werden, das die Wärmestrahlung berührungslos misst, die von der Oberfläche der Gießform emittiert wird, und anhand eines bekannten Emissionsgrades von der Oberfläche der Gießform, aus der gemessenen Wärmestrahlung die Temperatur der Oberfläche der Gießform bestimmt. Bei der Oberfläche der Gießform, deren Temperatur bestimmt wird, kann es sich beispielsweise um die innere Oberfläche der Gießform handeln. Bei der Oberfläche der Gießform, deren Temperatur bestimmt wird, kann es sich auch um die äußere Oberfläche der Gießform handeln. Dabei erfasst das Pyrometer bei der Durchführung einer Messung eine bestimmte Fläche auf der Oberfläche der Gießform, die als Messfläche bezeichnet werden kann, wobei die Messfläche in der Regel kleiner ist, als die Oberfläche der Gießform. Erfindungsgemäß kann das Pyrometer so in das System integriert sein, dass es zumindest um eine Achse und / oder entlang einer Achse beweglich ist, wodurch das Pyrometer für verschiedene Messungen verschieden ausgerichtet werden kann, um die Wärmestrahlung von verschiedenen Messflächen auf der Oberfläche der Gießform messen zu können. Das Pyrometer kann auch so ausgerichtet werden, dass es die Wärmestrahlung von verschiedenen Messflächen auf der Oberfläche von verschiedenen Gießformen messen kann. Die Ausrichtung des Pyrometers kann beispielsweise mittels eines Schrittmotors herbeigeführt werden. Alternativ kann das Pyrometer auch mittels eines Servomotors ausgerichtet werden. Beispielsweise können für die Ausrichtung des Pyrometers auch Hydraulik- oder Pneumatik-Aktuatoren verwendet werden. Der zumindest eine Wert der bestimmten Temperatur kann beispielsweise an einen Mikrocontroller übermittelt werden, der basierend auf der bestimmten Temperatur der zumindest einen Messfläche der zumindest einen Gießform das induktive Erhitzen steuern kann. Mit Hilfe des Mikrocontrollers ist es einerseits möglich, die Wärmestrahlung von zumindest einer bestimmten Messfläche zu messen und dadurch die Temperatur von dem zumindest einen bestimmten Bereich der Oberfläche der Gießform zu bestimmen und das induktive Erhitzen darauf basierend zu steuern. Andererseits ist es auch möglich, die Wärmestrahlung von verschiedenen Messflächen zu messen und zusammenzufassen und dadurch zumindest eine mittlere Temperatur von den verschiedenen Bereichen der Oberfläche der zumindest einen Gießform zu bestimmen und das induktive Erhitzen darauf basierend zu steuern. Erfindungsgemäß kann der Mikrocontroller auch Anweisungen geben, mit denen der zumindest eine Induktor gesteuert werden kann und mit denen beispielsweise das induktive Erhitzen unterbrochen und / oder fortgesetzt werden kann. Der Mikrocontroller kann darüber hinaus auch Anweisungen geben, mit denen der zumindest eine Hubmechanismus in Bewegung versetzt werden kann, von dem der zumindest eine Induktor und / oder die zumindest eine Gießform und / oder das zumindest eine Strukturelement bewegt werden. Dem Fachmann ist bewusst, dass aber auch andere Mittel zum Bestimmen einer Temperatur verwendet werden können. Beispielsweise kann die Temperatur der zumindest einen Gießform auch mittels Temperatursensoren innerhalb der zumindest einen Gießform bestimmt werden, bei denen beispielsweise der elektrische Widerstand von der Temperatur abhängig ist. Dem Fachmann ist bewusst, dass die Messung der Temperatur der zumindest einen Gießform, ähnlich der Bewegung des zumindest einen Hubmechanismus und / oder des zumindest einen Strukturelements und / oder des zumindest einen Induktors und / oder der zumindest einen Gießform, getaktet sein kann. Zum Beispiel kann die Temperatur der zumindest einen Gießform parallel zu dem induktiven Erhitzen - also während des induktiven Erhitzens - gemessen werden und darauf basierend kann das induktive Erhitzen direkt gesteuert werden. Dem Fachmann ist auch bewusst, dass das induktive Erhitzen der zumindest einen Gießform und die Messung der Temperatur der zumindest einen Gießform beispielsweise auch um einen Arbeitstakt versetzt stattfinden kann. Zum Beispiel kann das Mittel zum Messen der Temperatur derart angeordnet sein, dass es ortsfest ist, während die Gießformen an dem Mittel zum Messen der Temperatur vorbeibewegt werden. Hierbei kann die zumindest eine Gießform in einem ersten Arbeitstakt induktiv erhitzt werden und nach dem Weitertakten des zumindest einen Strukturelements kann in einem zweiten Arbeitstakt die Temperatur der zumindest einen Gießform erfasst werden. Der erfasste Temperaturwert kann dabei einen Istwert darstellen und der Istwert kann mit einem Sollwert verglichen werden. Aus der Differenz zwischen dem Istwert und dem Sollwert kann das induktive Erhitzen, die in einem nachfolgenden ersten Arbeitstakt der zumindest einen nachfolgenden Gießform stattfindet, gesteuert werden.

Die Erfindung wird nachfolgend anhand von Ausführungsbeispielen mit den beigefügten Zeichnungen näher erläutert. Aus den beschriebenen Ausführungsbeispielen ergeben sich weitere Einzelheiten, Merkmale und Vorteile des Gegenstands der Erfindung. Es zeigen:
- Fig. 1: einen Vertikalschnitt durch eine exemplarische Gießform, durchsetzt von einem Zusatzstoff und umgeben von einem Induktor;
- Fig. 2: die in Fig. 1 gezeigte exemplarische Gießform mit innenliegendem Induktor;
- Fig. 3: einen Vertikalschnitt durch eine weitere exemplarische Gießform, nur in bestimmten Bereichen von einem Zusatzstoff durchsetzt und umgeben von einem Induktor;
- Fig. 4: einen Vertikalschnitt durch eine weitere exemplarische Gießform, durchsetzt von einem Zusatzstoff und mit integriertem Induktor;
- Fig. 5a bis 5e: einen Vertikalschnitt durch mehrere Gießformen, die taktweise von einem Induktor induktiv erhitzt werden.

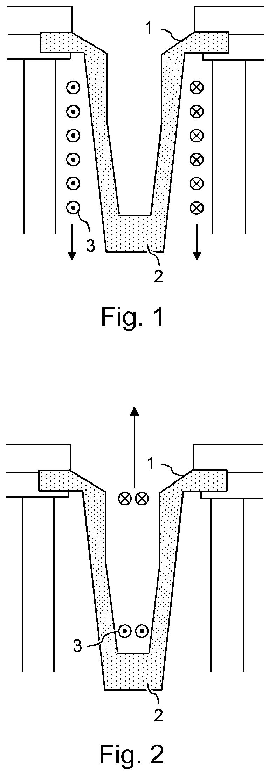

Figur 1 zeigt anhand eines Vertikalschnitts durch eine Gießform 1 schematisch das induktive Erhitzen der Gießform 1 mittels eines Induktors 3, wobei die Gießform 1 durchsetzt ist mit einem Zusatzstoff 2, der induktiv erhitzbar ist.

Bei dem Induktor 3 handelt es sich hier um einen so genannten Innenfeldinduktor, der die Gestalt einer Spule aufweisen kann, die ebenfalls anhand eines Vertikalschnitts gezeigt wird. Dabei deutet das Kreuz in der Schnittfläche der Windungen von dem Induktor 3 an, dass der Strom hier in die Bildebene fließt und der Punkt in der Schnittfläche der Windungen von dem Induktor 3 deutet an, dass der Strom hier aus der Bildebene herausfließt.

Die höchste magnetische Flussdichte des induzierten magnetischen Feldes tritt hierbei im Inneren des Induktors 3 auf und der Induktor 3 und die Gießform 1 sind während des induktiven Erhitzens so angeordnet, dass die dem Induktor 3 zugewandte Oberfläche der Gießform 1 die Außenfläche der Gießform 1 ist. Der Induktor 3 und / oder die Gießform 1 werden für das induktive Erhitzen mittels zumindest eines Hubmechanismus (nicht gezeigt) relativ zueinander bewegt, sodass dass die dem Induktor 3 zugewandte Oberfläche der Gießform 1 die Außenfläche der Gießform 1 ist. Es kann auch gesagt werden, dass die Gießform 1 zumindest teilweise in den Induktor 3 eintaucht. Nach dem Beenden des induktiven Erhitzens werden der Induktor 3 und / oder die Gießform 1 wieder relativ bewegt, sodass der Induktor 3 und die Gießform 1 sich voneinander wegbewegen. Die Relativbewegung des Induktors 3 und der Gießform 1 ist durch die Pfeile dargestellt.

In Figur 2 wird ein Vertikalschnitt durch eine Gießform 1 gezeigt, wobei die Gießform 1 durchsetzt ist mit einem Zusatzstoff 2, der induktiv erhitzbar ist. Bei dem Induktor 3 handelt es sich in dem hier gezeigten Ausführungsbeispiel um einen so genannten Außenfeldinduktor. Die höchste magnetische Flussdichte des induzierten magnetischen Feldes tritt hierbei außerhalb des Induktors 3 auf und der Induktor 3 und die Gießform 1 sind während des induktiven Erhitzens so angeordnet, dass die dem Induktor 3 zugewandte Oberfläche der Gießform 1 die Innenfläche der Gießform 1 ist. Der Induktor 3 und / oder die Gießform 1 werden für das induktive Erhitzen mittels zumindest eines Hubmechanismus (nicht gezeigt) relativ zueinander bewegt, sodass dass die dem Induktor 3 zugewandte Oberfläche der Gießform 1 die Innenfläche der Gießform 1 ist. Es kann auch gesagt werden, dass der Induktor 3 zumindest teilweise in die Gießform 1 eintaucht. Nach dem Beenden des induktiven Erhitzens werden der Induktor 3 und / oder die Gießform 1 wieder relativ bewegt, sodass der Induktor 3 und die Gießform 1 sich voneinander wegbewegen. Die Relativbewegung des Induktors 3 und der Gießform 1 wird durch den Pfeil dargestellt.

Die Form und die Gestalt des Induktors 3 ist schematisch dargestellt und kann von der Darstellung abweichen. Beispielsweise kann der Induktor 3 auch die Form einer Flächenspule aufweisen. Der Einsatz des Induktors 3 in Form von einer Flächenspule bei dem induktiven Erhitzen kann beispielsweise eine Konzentration der induzierten magnetischen Feldlinien in bestimmten Bereichen bewirken, wodurch die zumindest eine Gießform 1 in bestimmten Bereichen gezielt einen hohen Grad an induktivem Erhitzen erfahren kann. Dem Fachmann sind weitere Hilfsmittel bekannt, mit denen der Einsatz des Induktors 3 für ein induktives Erhitzen optimiert werden kann. Beispielsweise kann das System, mit dem das induktive Erhitzen ermöglicht wird, zusätzlich auch zumindest einen so genannten Polschuh (nicht gezeigt) beinhalten, mit dem beispielsweise der Verlauf der Feldlinien des von dem Induktor 3 induzierten magnetischen Wechselfeldes in bestimmten Bereichen homogenisiert werden kann. Das bedeutet, dass sich die magnetische Flussdichte und die Bahn der magnetischen Feldlinien in bestimmten Bereichen über eine bestimmte Distanz hinweg in ihrem Betrag und in ihrem Verlauf nur wenig ändern. Durch den homogenen Verlauf der Feldlinien des induzierten magnetischen Wechselfeldes kann somit die zumindest eine Gießform 1 in bestimmten Bereichen ein homogenes induktives Erhitzen erfahren.

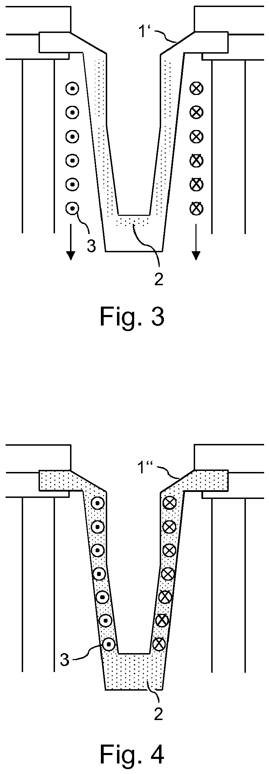

Figur 3 zeigt anhand eines Vertikalschnitts durch die Gießform 1' schematisch das induktive Erhitzen der Gießform 1' mittels eines Induktors 3, wobei die Gießform 1' nur in bestimmten Bereichen mit einem Zusatzstoff 2 durchsetzt ist, der induktiv erhitzbar ist. In den Bereichen der Gießform 1', in denen die Gießform 1' nicht mit dem Zusatzstoff 2 durchsetzt ist, tritt kein induktives Erhitzen der Gießform 1' auf, da der Kunststoff oder das Elastomer, aus denen die Gießform 1' erfindungsgemäß im Wesentlichen besteht, nicht induktiv erhitzbar sind. In diesen Bereichen wird die Gießform 1' lediglich indirekt durch Wärmeübertragung erhitzt. Mit Hilfe der Durchsetzung der Gießform 1' mit dem Zusatzstoff 2, der induktiv erhitzbar ist, in bestimmten Bereichen der Gießform 1', kann mit dem von dem Induktor 3 induzierten magnetischen Wechselfeld die Gießform 1' in den bestimmten Bereichen induktiv erhitzt werden. Beispielsweise kann die Gießform 1' mit dem Zusatzstoff 2 nahe an der Innenfläche der Gießform 1' durchsetzt sein, wodurch ein gezieltes induktives Erhitzen der Gießform 1' nahe an der Innenfläche der Gießform 1' ermöglicht wird. Beispielsweise kann die Gießform 1' auch in verschiedenen Bereichen mit einer unterschiedlichen Konzentration des Zusatzstoffes 2 mit dem Zusatzstoff 2 durchsetzt sein. Die Konzentration des Zusatzstoffes 2, mit dem die Gießform 1' durchsetzt ist, wirkt sich auf den Grad des induktiven Erhitzens der Gießform 1' aus. In Bereichen mit hoher Konzentration tritt ein hoher Grad des induktiven Erhitzens der Gießform 1' auf und in Bereichen mit geringer Konzentration tritt ein geringer Grad des induktiven Erhitzens der Gießform 1' auf. Beispielsweise kann die Konzentration des Zusatzstoffes 2 nahe an der Innenfläche der Gießform 1' hoch sein, wodurch der Grad des induktiven Erhitzens der Gießform 1' nahe an der Innenfläche der Gießform 1' hoch sein kann.

Figur 4 zeigt anhand eines Vertikalschnitts durch die Gießform 1" schematisch das induktive Erhitzen der Gießform 1". In diesem Ausführungsbeispiel geschieht das induktive Erhitzen der Gießform 1" von innen heraus. Der Induktor 3 kann dabei so ausgestaltet sein, dass er die Flexibilität der Gießform 1", die erfindungsgemäß im Wesentlichen aus einem Kunststoff oder Elastomer besteht, nicht beeinträchtigt. Dabei kann der Induktor 3 und das den Induktor umgebende Material, also der induktiv erhitzbare Zusatzstoff 2, galvanisch getrennt sein. Beispielsweise kann die galvanische Trennung aus einer Ummantelung des Induktors 3 bestehen. Ein Vorteil des integrierten Induktors 3 gegenüber außenliegenden Induktoren kann beispielsweise sein, dass der Induktor 3 und die Gießform 1" vor und nach dem induktiven Erhitzen keine Relativbewegung zueinander ausführen müssen, und dass dadurch nach dem Beenden des induktiven Erhitzens beispielsweise unmittelbar weitere Prozessschritte im Herstellungsprozess von kosmetischen Produkten durchgeführt werden können. Hierdurch kann beispielsweise die Zykluszeit verringert werden.

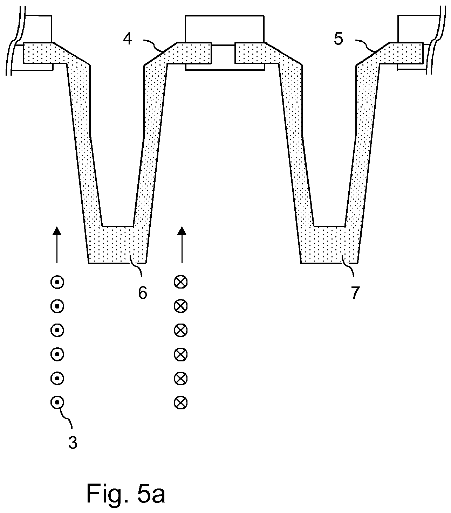

Figuren 5a bis 5e zeigen anhand eines Vertikalschnitts durch mehrere Gießformen 4, 5 schematisch das taktweise induktive Erhitzen der Gießformen 4, 5 mittels eines Induktors 3, wobei die Gießformen 4, 5 durchsetzt sind mit zumindest einem Zusatzstoff 6, 7 der induktiv erhitzt werden kann. Bei dem zumindest einen Zusatzstoff 6, 7 kann es sich um denselben Zusatzstoff handeln. In den hier gezeigten Ausführungsbeispielen sind die Gießformen 4, 5 auf einem Strukturelement befestigt, wobei auf dem Strukturelement beispielsweise zumindest eine erste Gießform 4 und zumindest eine zweite Gießform 5 befestigt sein können. D.h. das Strukturelement kann die Gießformen 4, 5 tragen. Die Bewegung der Gießformen 4, 5 geht somit mit der Bewegung des Strukturelements einher. Es ist dem Fachmann bewusst, dass das Strukturelement auch weitere Gießformen (nicht gezeigt) tragen kann.

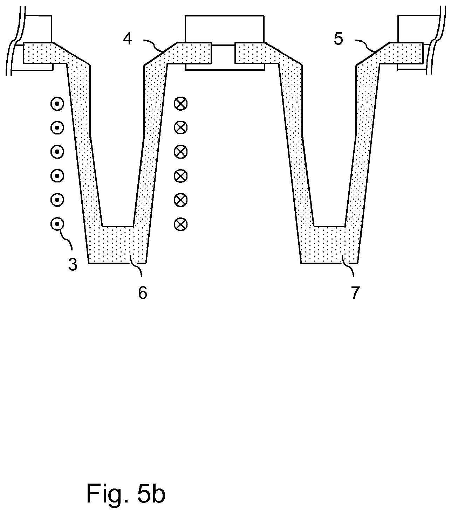

Figur 5a zeigt schematisch den Beginn eines ersten Zeitabschnitts in einem ersten Arbeitstakt, wobei die erste Gießform 4 und der Induktor 3 sich beide in einer ersten Position befinden, die als Ausgangspositionen der ersten Gießform 4 und des Induktors 3 bezeichnet werden können. Die erste Gießform 4 und der Induktor 3 werden anschließend in einer Relativbewegung bewegt. In dem hier dargestellten Ausführungsbeispiel wird der Induktor 3 aus seiner ersten Position zu der ersten Gießform 4 in eine zweite Position bewegt. Die erste Gießform 4 verbleibt dabei in ihrer ersten Position. Die Bewegung des Induktors 3 wird in der Figur 5a durch die vertikalen Pfeile dargestellt. Die zweite Position des Induktors 3 wird in Figur 5b dargestellt. Dem Fachmann ist bewusst, dass die hier beschriebene Relativbewegung der ersten Gießform 4 und des Induktors 3 auch dadurch erfolgen kann, dass der Induktor 3 in seiner ersten Position verbleibt und die erste Gießform 4 zum Induktor 3 bewegt wird. Die erste Gießform 4 kann auch an einem Strukturelement befestigt sein, welches dieselben Relativbewegungen wie die erste Gießform 4 ausführt. Die Relativbewegung des Induktors 3 und des Strukturelements kann beispielsweise auch durch ein gleichzeitiges Bewegen des Induktors 3 und des Strukturelements ausgeführt werden. Der erste Zeitabschnitt des ersten Arbeitstaktes wird mit dem Erreichen der zweiten Position des Induktors 3 abgeschlossen.

Figur 5b zeigt schematisch einen zweiten Zeitabschnitt in dem ersten Arbeitstakt, wobei sich der Induktor 3 in der zweiten Position befindet, in der die erste Gießform 4 von dem Induktor 3 induktiv erhitzt werden kann. Der zweite Zeitabschnitt des ersten Arbeitstaktes wird mit dem Beenden des induktiven Erhitzens abgeschlossen. Das Ende des induktiven Erhitzens durch den Induktor 3 kann beispielsweise durch einen Temperatursensor (nicht gezeigt) indiziert werden. Dabei kann der Temperatursensor ein Signal an eine Steuerung des Induktors 3 abgeben und basierend auf dem Signal kann das induktive Erhitzen gesteuert werden. Anschließend werden die erste Gießform 4 und der Induktor 3 in einer Relativbewegung voneinander wegbewegt. Dabei wird der Induktor 3 aus seiner zweiten Position - wie in Figur 5b gezeigt - von der ersten Gießform 4 weg in seine erste Position - wie in Figur 5a gezeigt - bewegt. Die erste Gießform 4 verbleibt dabei in ihrer ersten Position. Dem Fachmann ist bewusst, dass die hier beschriebene Relativbewegung der ersten Gießform 4 und des Induktors 3 auch dadurch erfolgen kann, dass der Induktor 3 in seiner Position verbleibt und die erste Gießform 4 vom Induktor 3 wegbewegt wird.

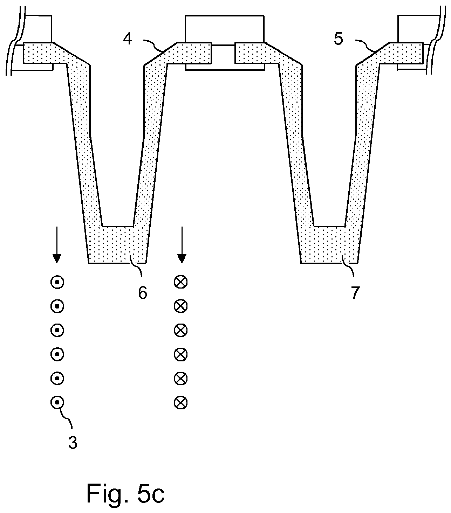

Figur 5c zeigt schematisch das Ende eines dritten Zeitabschnitts in dem ersten Arbeitstakt, wobei der Induktor 3 sich wieder in seine erste Position - wie in Figur 5a gezeigt - bewegt. Die Bewegung des Induktors 3 wird in der Figur 5c durch die vertikalen Pfeile dargestellt. Der dritte Zeitabschnitt des ersten Arbeitstaktes wird mit dem Erreichen der Ausgangsposition abgeschlossen. Mit dem Abschließen des dritten Zeitabschnitts des ersten Arbeitstaktes wird auch der erste Arbeitstakt abgeschlossen. Anschließend können die erste Gießform 4 und der Induktor 3 in einer weiteren Relativbewegung, die auch als Weitertaktung bezeichnet werden kann, bewegt werden.

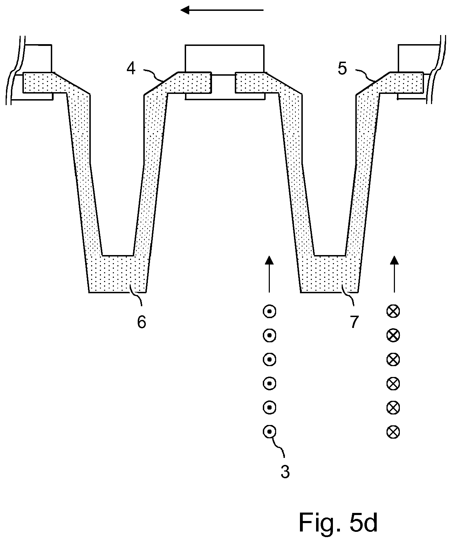

Das Weitertakten wird in der Figur 5d durch den horizontalen Pfeil dargestellt. In dem hier dargestellten Ausführungsbeispiel wird die erste Gießform 4 aus ihrer ersten Position in eine zweite Position bewegt, wobei sich die erste Gießform 4 horizontal von dem Induktor 3 wegbewegt. Der Induktor 3 verbleibt dabei in seiner ersten Position. Dadurch, dass in dem hier gezeigten Ausführungsbeispiel die erste Gießform 4 auf einem Strukturelement befestigt ist, auf dem auch zumindest eine zweite Gießform 5 befestigt ist, wird auch die zumindest eine zweite Gießform 5 bewegt, wenn durch die Bewegung des Strukturelements die erste Gießform 4 bewegt wird. Mit dem Weitertakten der ersten Gießform 4 wird somit auch die zumindest eine zweite Gießform 5 weitergetaktet. Das Weitertakten kann beispielsweise abgeschlossen werden, wenn die zumindest eine zweite Gießform 5 eine erste Position erreicht, die der ersten Position der ersten Gießform 4 entspricht. Mit dem Erreichen der ersten Position der zumindest einen zweiten Gießform 5 kann ein zweiter Arbeitstakt beginnen. Dem Fachmann ist bewusst, dass die Relativbewegung während des Weitertaktens auch ausgeführt werden kann, indem der Induktor 3 bewegt wird, während das Strukturelement und somit die erste Gießform 4 und die zumindest eine zweite Gießform 5 nicht bewegt werden. Die Relativbewegung des Induktors 3 und des Strukturelements während des Weitertaktens kann beispielsweise auch durch ein gleichzeitiges Bewegen des Induktors 3 und des Strukturelements ausgeführt werden.

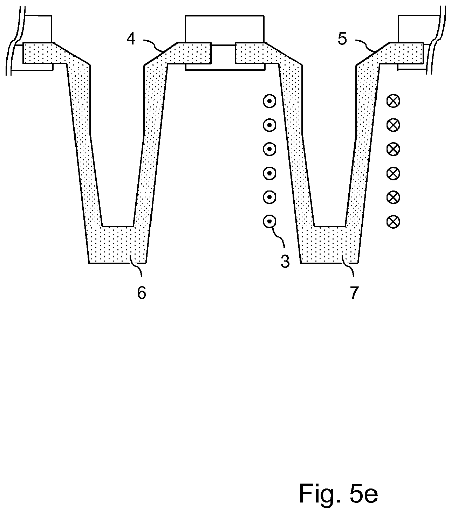

Außerdem zeigt Figur 5d schematisch den Beginn eines ersten Zeitabschnitts in dem zweiten Arbeitstakt. Dabei befinden sich die zweite Gießform 5 und der Induktor 3 beide in einer ersten Position. Die zweite Gießform 5 und der Induktor 3 werden anschließend in einer Relativbewegung bewegt. In dem hier dargestellten Ausführungsbeispiel wird der Induktor 3 aus seiner ersten Position zu der zweiten Gießform 5 in eine zweite Position bewegt. Die zweite Gießform 5 verbleibt dabei in ihrer ersten Position. Die Bewegung des Induktors 3 wird in der Figur 5d durch die vertikalen Pfeile dargestellt. Die zweite Position des Induktors 3 ist in Figur 5e dargestellt. Dem Fachmann ist bewusst, dass die hier beschriebene Relativbewegung der zweiten Gießform 5 und des Induktors 3 auch dadurch erfolgen kann, dass der Induktor 3 in seiner ersten Position verbleibt und die zweite Gießform 5 zum Induktor 3 bewegt wird. Der erste Zeitabschnitt des zweiten Arbeitstaktes wird mit dem Erreichen der zweiten Position des Induktors 3 abgeschlossen.

Figur 5e zeigt schematisch einen zweiten Zeitabschnitt in dem zweiten Arbeitstakt, wobei sich der Induktor 3 in der zweiten Position befindet, in der die zweite Gießform 5 von dem Induktor 3 induktiv erhitzt werden kann.

Es wird deutlich, dass sich die Arbeitstakte sowie die Zeitabschnitte der Arbeitstakte gleichen, und dass mit den Figuren 5a bis 5e exemplarisch ein Verfahren für ein taktweise induktives Erhitzen von Gießformen dargestellt wird, mit dem eine Vielzahl von Gießformen taktweise induktiv erhitzt werden kann, so dass dieses Verfahren als ein taktgesteuerter Prozess bei der Lippenstiftminenherstellung implementiert werden kann.

Es wird vom Fachmann verstanden werden, dass die gezeigten Ausführungsbeispiele nur beispielhaft sind und alle gezeigten Elemente, Module, Bauteile, Teilnehmer und Einheiten verschieden ausgestaltet sein können aber dennoch die hier beschriebenen Grundfunktionalitäten erfüllen können.

## Patentansprüche

1. Ein Verfahren zum Erhitzen von Gießformen (1), insbesondere zum Erhitzen von Gießformen (1) für kosmetische Produkte, das Verfahren aufweisend:
Erzeugen von zumindest einem magnetischen Wechselfeld mit Hilfe von zumindest einem Induktor (3); und
induktives Erhitzen von zumindest einer Gießform (1), wobei die zumindest eine Gießform (1) im Wesentlichen aus einem Kunststoff oder einem Elastomer besteht und mit zumindest einem Zusatzstoff (2) durchsetzt ist, wobei der zumindest eine Zusatzstoff (2) induktiv erhitzt werden kann.

2. Das Verfahren nach Anspruch 1, weiter aufweisend:
Regeln des zumindest einen magnetischen Wechselfeldes.

3. Das Verfahren nach Anspruch 2, wobei zum Erzeugen des zumindest einen magnetischen Wechselfeldes der zumindest eine Induktor (3) von einem Wechselstrom durchflossen wird und wobei das Regeln des zumindest einen magnetischen Wechselfeldes das Regeln der Stärke des Wechselstromes beinhaltet.

4. Das Verfahren nach Anspruch 2, wobei zum Erzeugen des zumindest einen magnetischen Wechselfeldes der zumindest eine Induktor (3) von einem Wechselstrom durchflossen wird und wobei das Regeln des zumindest einen magnetischen Wechselfeldes das Regeln der Frequenz des Wechselstromes beinhaltet.

5. Das Verfahren nach einem der vorhergehenden Ansprüche, weiter aufweisend:
Einstellen eines Abstandes zwischen dem zumindest einen Induktor (3) und der zumindest einen Gießform (1).

6. Das Verfahren nach einem der vorhergehenden Ansprüche, weiter aufweisend:
Bestimmen einer Temperatur von der zumindest einen Gießform (1); und
Steuern des induktiven Erhitzens der zumindest einen Gießform (1) basierend auf der bestimmten Temperatur.

7. Eine Gießform (1), insbesondere eine Gießform (1) zum Formen von kosmetische Produkten, wobei die Gießform (1) im Wesentlichen aus einem Kunststoff oder einem Elastomer besteht und zumindest mit einem Zusatzstoff (2) durchsetzt ist, wobei der Zusatzstoff (2) induktiv erhitzt werden kann.

8. Die Gießform (1) nach Anspruch 7, wobei der Kunststoff ein Kunststoff aus der Gruppe von thermoplastisch verarbeitbaren Elastomeren, TPE, ist und das Elastomer ein Elastomer aus der Gruppe von thermisch vulkanisierbaren Silikonkautschuken ist.

9. Die Gießform (1) nach Anspruch 7, wobei der zumindest eine Zusatzstoff ein Zusatzstoff aus der Gruppe von ferromagnetischen Stoffen ist und / oder eine Legierung ist.

10. Ein System zum Erhitzen von Gießformen (1), insbesondere zum Erhitzen von Gießformen (1) für kosmetische Produkte, das System aufweisend:
zumindest einen Induktor (3) zum Erzeugen von zumindest einem magnetischen Wechselfeld; und
zumindest eine Gießform (1), wobei die Gießform (1) im Wesentlichen aus einem Kunststoff oder einem Elastomer besteht und zumindest mit einem Zusatzstoff (2) durchsetzt ist, wobei der Zusatzstoff (2) induktiv erhitzt werden kann.

11. Das System nach Anspruch 10, wobei das System weiter aufweist:
ein Mittel zum Regeln der Stärke des Wechselstromes und / oder zum Regeln der Frequenz des Wechselstromes, von dem der zumindest eine Induktor (3) durchflossen wird zum Erzeugen des magnetischen Wechselfeldes.

12. Das System nach Anspruch 11, wobei die Stärke des Wechselstromes, von dem der zumindest eine Induktor (3) durchflossen wird, im Bereich von 50 A bis 400 A eingestellt wird und / oder wobei die Frequenz des Wechselstromes, von dem der zumindest eine Induktor (3) durchflossen wird, im Bereich von 50 Hz bis 450 kHz eingestellt wird.

13. Das System nach einem der Ansprüche 10 bis 12, weiter aufweisend:
ein Mittel zum Einstellen des Abstandes zwischen dem zumindest einen Induktor (3) und der zumindest einen Gießform (1).

14. Das System nach Anspruch 13, wobei das Mittel zum Einstellen des Abstandes angepasst ist den zumindest einen Induktor (3) und / oder die zumindest eine Gießform (1) zu bewegen.

15. Das System nach einem der Ansprüche 10 bis 14, weiter aufweisend:
ein Mittel zum Bestimmen einer Temperatur von der zumindest einen Gießform (1); und
ein Mittel zum Steuern des zumindest einen Induktors (3) basierend auf der bestimmten Temperatur.

## Claims

1. A method for heating casting moulds (1), in particular for heating casting moulds (1) for cosmetic products, said method comprising:
generating at least one alternating magnetic field by means of at least one inductor (3); and
inductive heating of at least one casting mould (1), wherein the at least one casting mould (1) consists essentially of a plastic or an elastomer and is interspersed with at least one additive (2), wherein the at least one additive (2) can be inductively heated.

2. The method according to claim 1, further comprising:
controlling of the at least one alternating magnetic field.

3. The method according to claim 2, wherein in order to generate the at least one alternating magnetic field an alternating current flows through the at least one inductor (3), and wherein the controlling of the at least one alternating magnetic field includes the controlling of the amperage of the alternating current.

4. The method according to claim 2, wherein in order to generate the at least one alternating magnetic field an alternating current flows through the at least one inductor (3), and wherein the controlling of the at least one alternating magnetic field includes the controlling of the frequency of the alternating current.

5. The method according to one of the preceding claims, further comprising:
adjusting a distance between said at least one inductor (3) and said at least one casting mould (1).

6. The method according to one of the preceding claims, further comprising:
determining a temperature of said at least one casting mould (1); and
steering the inductive heating of said at least one casting mould (1) based on said determined temperature.

7. A casting mould (1), in particular a casting mould (1) for moulding cosmetic products, wherein the casting mould (1) consists essentially of a plastic or an elastomer and is interspersed with at least one additive (2), wherein the additive (2) can be inductively heated.

8. The casting mould (1) according to claim 7, wherein the plastic is a plastic from the group of thermoplastically workable elastomers, TPE, and the elastomer is an elastomer from the group of thermally vulcanisable silicone rubbers.

9. The casting mould (1) according to claim 7, wherein the at least one additive is an additive from the group of ferromagnetic substances and/or an alloy.

10. A system for heating casting moulds (1), in particular for heating casting moulds (1) for cosmetic products, said system comprising:
at least one inductor (3) for generating at least one alternating magnetic field; and
at least one casting mould (1), wherein the casting mould (1) consists essentially of a plastic or an elastomer and is interspersed with at least one additive (2), wherein the additive (2) can be heated inductively.

11. The system according to claim 10, the system further comprising:
a means for controlling the amperage of the alternating current and/or for controlling the frequency of the alternating current, which passes through the at least one inductor (3) in order to generate the alternating magnetic field.

12. The system according to claim 11, wherein the amperage of the alternating current flowing through the at least one inductor (3) is set in the range from 50 A to 400 A and/or wherein the frequency of the alternating current flowing through the at least one inductor (3) is set in the range from 50 Hz to 450 kHz.

13. The system according to any of claims 10 to 12, further comprising:
a means for adjusting the distance between said at least one inductor (3) and said at least one casting mould (1).

14. The system according to claim 13, wherein the means for adjusting the distance is adapted to move the at least one inductor (3) and/or the at least one casting mould (1).

15. The system according to any of claims 10 to 14, further comprising:
a means for determining a temperature of said at least one casting mould (1); and
a means for steering said at least one inductor (3) based on said determined temperature.

## Revendications

1. Un procédé pour chauffer des moules creux (1), en particulier pour chauffer des moules creux (1) pour des produits cosmétiques, le procédé comprenant :
générer au moins un champ magnétique alternatif à l'aide d'au moins une inductance (3) ; et à
chauffer par induction au moins un moule creux (1), le au moins un moule creux (1) étant constitué pour l'essentiel d'une matière synthétique ou d'un élastomère et étant chargé avec au moins un additif (2), le au moins un additif (2) pouvant être chauffé par induction.

2. Le procédé selon la revendication 1, comprenant en outre :
réguler le au moins un champ magnétique alternatif.

3. Le procédé selon la revendication 2, dans lequel pour générer le au moins un champ magnétique alternatif la au moins une inductance (3) est parcourue par un courant alternatif, et la régulation du au moins un champ magnétique alternatif incluant la régulation de la puissance du courant alternatif.

4. Le procédé selon la revendication 2, dans lequel pour générer le au moins un champ magnétique alternatif la au moins une inductance (3) est parcourue par un courant alternatif, et la régulation du au moins un champ magnétique alternatif incluant la régulation de la fréquence du courant alternatif.

5. Le procédé selon l'une des revendications précédentes, comprenant en outre :
régler une distance entre la au moins une inductance (3) et le au moins un moule creux (1).

6. Le procédé selon l'une des revendications précédentes, comprenant en outre :
déterminer une température du au moins un moule creux (1) ; et à
commander le chauffage inductif du au moins un moule creux (1) sur la base de la température déterminée.

7. Un moule creux (1), en particulier un moule creux (1) pour mouler des produits cosmétiques, le moule creux (1) étant constitué pour l'essentiel d'une matière synthétique ou d'un élastomère et étant chargé au moins avec un additif (2), l'additif (2) pouvant être chauffé par induction.

8. Le moule creux (1) selon la revendication 7, dans lequel la matière synthétique est une matière synthétique provenant du groupe des élastomères thermoplastiques façonnables, TPE, et l'élastomère est un élastomère provenant du groupe des caoutchoucs silicones vulcanisables à la chaleur.

9. Le moule creux (1) selon la revendication 7, dans lequel le au moins un additif est un additif provenant du groupe des matières ferromagnétiques et/ou est un alliage.

10. Un système pour chauffer des moules creux (1), en particulier pour chauffer des moules creux (1) pour des produits cosmétiques, dans lequel le système comprend :
au moins une inductance (3) pour générer au moins un champ magnétique alternatif ; et
au moins un moule creux (1), le moule creux (1) étant constitué pour l'essentiel d'une matière synthétique ou d'un élastomère et étant chargé au moins avec un additif (2), l'additif (2) pouvant être chauffé par induction.

11. Le système selon la revendication 10, dans lequel le système comprend en outre :
un moyen pour réguler l'intensité du courant alternatif et/ou pour réguler la fréquence du courant alternatif par lequel est parcourue la au moins une inductance (3) pour générer le champ magnétique alternatif.

12. Le système selon la revendication 11, dans lequel l'intensité du courant alternatif par lequel est parcourue la au moins une inductance (3) est réglée dans la plage de 50 A à 400 A, et/ou la fréquence du courant alternatif par lequel est parcourue la au moins une inductance (3) est réglée dans la plage de 50 Hz à 450 Hz.

13. Le système selon l'une des revendications précédentes 10 à 12, comprenant en outre :
un moyen pour régler la distance entre la au moins une inductance (3) et le au moins un moule creux (1).

14. Le système selon la revendication 13, dans lequel le moyen pour régler la distance est apte à déplacer la au moins une inductance (3) et/ou le au moins un moule creux (1).

15. Le système selon l'une des revendications 10 à 14, comprenant en outre :
un moyen pour déterminer une température du au moins un moule creux (1) ; et
un moyen pour commander la au moins une inductance (3) sur la base de la température déterminée.
